# EUROPÄISCHE PATENTSCHRIFT

(11) **EP 2 315 800 B1**
(45) Veröffentlichungstag und Bekanntmachung des Hinweises auf die Patenterteilung: **01.10.2014**
(21) Anmeldenummer: 09777958.1
(22) Anmeldetag: 19.08.2009
(51) Int. Cl.: C08K 5/00

(54) **STOFF AUS METALL UND MILCHSÄUREKONDENSAT SOWIE ELEKTRONISCHES BAUTEIL**
MATERIAL COMPRISED OF METAL AND LACTIC ACID CONDENSATE AND ELECTRONIC COMPONENT
MATIÈRE CONSTITUÉE DE MÉTAL ET DE CONDENSAT D'ACIDE LACTIQUE, AINSI QUE COMPOSANT ÉLECTRONIQUE

(30) Priorität: 22.08.2008 DE 102008039247; 26.03.2009 DE 102009014424
(43) Veröffentlichungstag der Anmeldung: 04.05.2011
(73) Patentinhaber: Heraeus Materials Technology GmbH & Co. KG, 63450 Hanau (DE)
(72) Erfinder: SCHMITT, Wolfgang, 63110 Rodgau (DE); SCHÄFER, Michael, 36093 Künzell (DE); BARTELS, Ferdinand, 64287 Darmstadt (DE)
(74) Vertreter: Kühn, Hans-Christian
(86) Internationale Anmeldenummer: PCT/EP2009/005992
(87) Internationale Veröffentlichungsnummer: WO 2010/020400

(56) Entgegenhaltungen:
- EP-A- 2 042 260
- CH-A- 398 247
- DE-A1-102006 029 829
- US-A1- 2003 108 664

## Beschreibung

Die Erfindung betrifft einen Stoff aus Metall und einem Milchsäurekondensat, sowie ein elektronisches Bauteil mit einer Beschichtung aus dem Stoff.

Die vorliegende Erfindung betrifft insbesondere die Herstellung von Metallisierungen auf oxidischen Oberflächen, insbesondere keramischen Oberflächen, oder auf Metallen, insbesondere auf Aluminium, Kupfer, Silber, Gold oder Nickel; und Grundierungen zur Herstellung von Metallgrundierungen, sowie deren Verwendung zur Befestigung von Körpern.

Bekannte Verfahren zur Erzeugung von Grundierungen sind die bekannten Dünnschichtverfahren, wie z. B. Sputtern oder Vakuumabscheidung, die bekannten Dickschichtverfahren, wie z. B. Siebdruck und die galvanischen Abscheidungen. Die galvanischen und Dünnschichtverfahren sind grundsätzlich aufwändig von der Apparatur und Verfahrensweise. Die Dickschichttechnik ist zwar einfach, erfordert jedoch hohe Temperaturen und scheidet deshalb als Metallisierungsverfahren bei temperaturempfindlichen Substraten wie z. B. Kunststoffen aus.

Das Lehrbuch der Chemie von J.J. Berzelius, 3. Auflage, Band 6, Dresden und Leipzig 1837, beschreibt auf S.137/138 Milchsäuresalze von Silber und Kupfer.

### Kupfer, Silber und Gold sind Hartlote.

Die Aufgabe der vorliegenden Erfindung besteht darin, Metallisierungen aus Kupfer, Silber und Gold schonend auf Oberflächen elektrischer Bauteile bereitzustellen, die einer Temperaturbelastung von 250° C, insbesondere 300° C, nicht standhalten, oder Körper unter schonenden Bedingungen mittels Kupfer, Silber oder Gold zu befestigen.

Zur Lösung der Aufgabe wird ein Primer bereitgestellt, der bei 150° C bis 300° C, insbesondere 200° C bis 250° C, zu einem Metall zersetzt wird.

Die Lösung der Aufgabe erfolgt mit den unabhängigen Ansprüchen. In den abhängigen Ansprüchen sind bevorzugte Ausführungen beschrieben.

Erfindungsgemäß wird ein Grundierungsmittel basierend auf einem Metall oder einer Metallverbindung von Kupfer, Silber oder Gold und Milchsäurederivaten als Primer zur Erzeugung einer Metallisierung aufgetragen und nach dem Auftrag zwischen 150° C und 300° C in die erwünschte Metallisierung überführt. Erfindungsgemäß sind auf diese Weise besonders haftfeste Metallisierungen mit Schichtdicken zwischen 10 und 50 µm, insbesondere 20 bis 30 µm, besonders leicht realisierbar. Selbst hitzebeständige Kunststoffe, wie z. B. Fluorpolymere oder Polyimide, kann man mit den erfindungsgemäßen Metallisierungen versehen. Es gibt weiterhin eine Vielzahl von Anwendungen, bei denen ein Auftrag eines Metalls auf einem anderen Metall nicht mit der Dickschichttechnik realisierbar ist, die mit der vorliegenden Erfindung realisierbar werden, wie beispielsweise das Aufbringen von Silber auf Aluminium.

Der dem Grundierungsmittel zu Grunde liegende Stoff ist insbesondere eine Lösung oder Verbindung von Kupfer, Silber oder Gold. Dabei sind vor allem Stoffe auf Kupfer oder Silberbasis wasserlöslich. Die Milchsäurederivate sind Kondensate. Besonders geeignet ist ein Verhältnis von 4 Milchsäurederivat-Einheiten pro Metallatom.

Zur Herstellung eines Beschichtungsmittels, insbesondere Grundiermittels, wird erfindungsgemäß ein Metall oder eine Metallverbindung mit einer wässrigen Milchsäurelösung oberhalb von 100° C gekocht, bis eine dickflüssige oder zähe fließfähige Masse entstanden ist. Dies ist eine besonders einfache Herstellung einer Metallverbindung, insbesondere Silberverbindung, die sich zur Metallisierung von Werkstoffen eignet, insbesondere von Glas, Keramik und Aluminium.

Das erfindungsgemäße Beschichtungsmittel eignet sich als Kleber zwischen vorgesinterten Metall-, insbesondere Silberflächen, zur Erzeugung Wärme oder elektrisch leitfähiger Kontakte oder zur Erzeugung von Leiterbahnen.

Auf einer erfindungsgemäß beschichteten Keramik eines DCB wird ein Kühlkörper leicht durch Sintern aufgebracht.

Die Beschichtung von Siliziumwafern erfolgt problemlos. Insbesondere für die Photovoltaik vereinfacht eine erfindungsgemäße Beschichtung von Aluminiumoberflächen auf Siliziumwafern eine Kontaktierung mit Kupfer- oder Silberbändchen.

Ein erfindungsgemäßes Beschichten von Glasloten erleichtert das Verbinden von Glas und Metall.

Die metallische Beschichtung von Glasfasern wird vereinfacht. Dazu wird eine einfache Herstellung leitfähiger Zellulose, Garne und Textilien ermöglicht.

Weiterhin ist die erfindungsgemäße Metalllösung als Härter, insbesondere für Acrylat- und Cyanester geeignet.

Weiterhin ist der erfindungsgemäße Stoff als Härter, insbesondere für Acrylat- und Cyanester geeignet. Die erfindungsgemäßen Verbindungen von Cu, Ag und Au zersetzen sich erst über 100° C und können deshalb lagerstabil dem Polymer-Grundstoff zugemischt werden. Die Härterwirkung wird erst im Bedarfsfall durch Temperaturerhöhung initiiert.

Die erfindungsgemäß ermöglichte einfache Herstellung von Metallflächen durch Zersetzung der Milchsäurederivate unter 350° C, insbesondere unter 300° C, eröffnet eine neue Fügetechnik. Metalle auf Basis von Kupfer, Silber oder Gold, die bisher als Hartlote über 400° C angewendet werden, sind erfindungsgemäß unter Weichlotbedingungen applizierbar. Man kann somit unter den Bedingungen des Weichlötens statt üblicher Weichlote auch Metalle applizieren, die dem Weichlotprozess bisher fremd waren, insbesondere Zinnlegierungen mit einem hohen Anteil an Kupfer, Silber oder Gold.

Im Folgenden wird die Erfindung anhand von Beispielen verdeutlicht.

Beim Kochen von Kupferpulver oder Kupferoxidpulver in einer wässrigen Milchsäurelösung wird eine klare grüne Lösung hergestellt, die solange bei 180° C erhitzt wird, bis sie nicht mehr wasserlöslich ist. Diese wasserunlösliche kupferhaltige Masse wird als Grundierung auf keramischen Flächen elektrischer Bauteile zur Erzeugung von Metallisierungen aufgedruckt. Der Druck wird getrocknet und zwischen 200° C und 250° C getempert, insbesondere unter Schutzgas, bis eine Kupfermetallisierung vorliegt.

Beim Kochen von Silberpulver oder Silberoxidpulver in einer wässrigen Milchsäurelösung wird beim Erhitzen der Mischung auf 200° C als wasserunlösliche gelbe dickflüssige Lösung oder zähe fließfähige Masse erzielt. Der Silbergehalt beträgt 20 bis 25 Gew.-%. Ein Überschuss an Silberkomponente verbleibt ungelöst zurück.

Dieses Silberbeschichtungsmittel wird auf Plättchen aus PTFE, Polyimid, Glas, einem keramischen Substrat aus Aluminiumoxid und Substraten mit einer Oberfläche aus Al, Cu, Ag, Si und Ni aufgetragen und nach dem Auftrag bei 280° C in eine Silbermetallisierung zersetzt. Die Metallisierungen haften sehr fest auf dem jeweiligen Untergrund. Die Silbermetallisierungen sind mit Weichlot lötbar, selbst wenn der Untergrund dies vorher nicht war. Auf den Silbermetallisierungen wurden weitere Metallpasten aufgetragen, mit denen mechanisch feste und thermisch und elektrisch leitfähige Verbindungen zwischen zwei zuvor losen Bauteilen erzeugt werden.

Silberlactid wird als Härter zur Polymerisation von Acrylaten, Epoxiden, Lactiden oder Cyanaten den zu härtenden Harzen zugegeben. Diese Mischungen sind lagerstabil. Die Härtung erfolgt bei Temperaturen über 120° C, insbesondere über 180° C.

Ein Goldbeschichtungsmittel wird durch Kochen einer Goldverbindung in einer wässrigen Milchsäurelösung erzeugt, wobei durch Erhitzen der Mischung auf 300° C zuerst eine Lösung erzeugt wird, die in eine wasserunlösliche fließfähige Masse übergeht. Der Goldgehalt beträgt 20 bis 30 Gew.-%, maximal bis zu einem stöchiometrischen Verhältnis 1:4 von Gold zu Milchsäure-Einheiten.

Dieses wasserunlösliche Goldbeschichtungsmittel wird auf Plättchen aus PTFE, Polyimid, Glas, einem keramischen Substrat aus Aluminiumoxid und Substraten mit einer Oberfläche aus Al, Cu, Ag und Ni aufgetragen und nach dem Auftrag zwischen 200° C und 300° C in eine Goldmetallisierung zersetzt. Die Metallisierungen haften sehr fest auf dem jeweiligen Untergrund. Auf den Goldmetallisierungen wurden weitere Metallpasten aufgetragen, mit denen mechanisch feste und thermisch und elektrisch leitfähige Verbindungen zwischen zwei zuvor losen Bauteilen erzeugt werden.

## Patentansprüche

1. Elektronisches Bauteil mit einer Oberfläche aus Metall, Keramik oder Oxid, **dadurch gekennzeichnet, dass** die Oberfläche mit einem Stoff aus Metall und einem Milchsäurekondensat beschichtet ist, wobei das Metall aus der Gruppe ausgewählt ist, die aus Kupfer, Silber und Gold besteht.

2. Elektronisches Bauteil nach Anspruch 1, **dadurch gekennzeichnet, dass** der Stoff ein Lactid, ein Dilactid oder ein Polylactid ist.

3. Elektronisches Bauteil nach Anspruch 1 oder 2, **dadurch gekennzeichnet, dass** der Stoff pro Metallatom 4 derivatisierte Milchsäureeinheiten aufweist.

4. Elektronisches Bauteil nach einem der Ansprüche 1 - 3, **dadurch gekennzeichnet, dass** das elektronische Bauteil bei Temperaturen über 300° C Schaden nimmt.

5. Verwendung eines Stoffs aus Metall und einem Milchsäurekondensat, wobei das Metall aus der Gruppe ausgewählt ist, die aus Kupfer, Silber und Gold besteht, als Grundierung für Metallkontakte.

## Claims

1. Electronic component having a surface made of metal, ceramics or oxide, **characterised in that** the surface is coated with a substance made of metal and a lactic acid condensate, whereby the metal is selected from the group consisting of copper, silver, and gold.

2. Electronic component according to claim 1, **characterised in that** the substance is a lactide, a dilactide or a polylactide.

3. Electronic component according to claim 1 or 2, **characterised in that** the substance comprises 4 derivatised lactic acid units per metal atom.

4. Electronic component according to any one of the claims 1 to 3, **characterised in that** the electronic component suffers damage at temperatures above 300° C.

5. Use of a substance made of metal and a lactic acid condensate, whereby the metal is selected from the group consisting of copper, silver, and gold, as primer for metal contacts.

## Revendications

1. Composant électronique avec une surface en métal, céramique ou oxyde, **caractérisé en ce que** la surface est enduite d'une substance en métal et d'un condensat d'acide lactique, dans lequel le métal est sélectionné parmi le groupe qui se compose du cuivre, de l'argent et de l'or.

2. Composant électronique selon la revendication 1, **caractérisé en ce que** la substance est un lactide, un dilactide ou un polylactide.

3. Composant électronique selon la revendication 1 ou 2, **caractérisé en ce que** la substance présente 4 fragments d'acide lactique dérivés par atome de métal.

4. Composant électronique selon l'une quelconque des revendications 1 à 3, **caractérisé en ce que** le composant électronique subit des dommages à des températures supérieures à 300°C.

5. Utilisation d'une substance en métal et d'un condensat d'acide lactique, dans laquelle le métal est sélectionné parmi le groupe qui se compose du cuivre, de l'argent et de l'or, en tant que couche primaire pour contacts métalliques.
